# EUROPÄISCHE PATENTSCHRIFT

(11) **EP 1 606 133 B1**
(45) Veröffentlichungstag und Bekanntmachung des Hinweises auf die Patenterteilung: **16.04.2008**
(21) Anmeldenummer: 04709982.5
(22) Anmeldetag: 11.02.2004
(51) Int. Cl.: B60K 31/00

(54) **VORRICHTUNG UND VERFAHREN ZUR GESCHWINDIGKEITSREGELUNG EINES KRAFTFAHRZEUGS**
DEVICE AND METHOD FOR CONTROLLING A MOTOR VEHICLE TRAVEL SPEED
DISPOSITIF ET PROCEDE DE REGULATION DE LA VITESSE D'UNE AUTOMOBILE

(30) Priorität: 12.03.2003 DE 10311192
(43) Veröffentlichungstag der Anmeldung: 21.12.2005
(73) Patentinhaber: ROBERT BOSCH GMBH, 70442 Stuttgart (DE)
(72) Erfinder: IRION, Albrecht, 70563 Stuttgart (DE); JOHN, Dirk, 71229 Leonberg (DE); DORENKAMP, Stephan, 72760 Reutlingen (DE)
(86) Internationale Anmeldenummer: PCT/DE2004/000245
(87) Internationale Veröffentlichungsnummer: WO 2004/080746

(56) Entgegenhaltungen:
- DE-A- 10 015 300
- DE-A- 10 047 748
- DE-A- 19 523 111
- US-B1- 6 282 483
- WINNER ET AL: "Adaptive Cruise Control System Aspects and Development Trends" SAE TRANSACTIONS, SOCIETY OF AUTOMOTIVE ENGINEERS, INC., WARRENDALE, PA, US, Bd. 105, Nr. 961010, 1996, Seiten 1412-1421, XP002124577 ISSN: 0096-736X in der Anmeldung erwähnt

## Beschreibung

Die vorliegende Erfindung betrifft eine Vorrichtung und ein Verfahren zur Geschwindigkeitsregelung eines Kraftfahrzeugs, wobei die Geschwindigkeitsregelung im Sinne einer Konstantabstandsregelung durchführbar ist, falls mittels eines Radarsensors mindestens ein vorherfahrendes Fahrzeug detektiert wurde oder die Geschwindigkeitsregelung im Sinne einer Konstantgeschwindigkeitsregelung durchführbar ist, falls mittels eines Radarsensors kein vorherfahrendes Fahrzeug detektiert wurde. Dem Geschwindigkeitsregler werden Objektmesswerte für bekannte Objekte zugeführt, er umfasst ein Rechenmittel, das für jeden Messwert eines jeden Objekts einen Beschleunigungsgradienten bestimmt, er addiert für jedes Objekt die einzelnen Beschleunigungsgradienten der Messwerte und gibt den addierten Beschleunigungsgradienten für das als Zielobjekt ausgewählte Objekt aus.

### Stand der Technik

Aus der Veröffentlichung "Adaptive Cruise Control System Aspect and Development Trends" von Winner, Witte, Uhler und Lichtenberg, veröffentlicht auf der SAE International Congress and Exposition, Detroit, 26. - 29. Februar 1996 (SAE-paper 961010) ist ein adaptiver Geschwindigkeitsregler bekannt, der Radarstrahlung aussendet und die an stehenden Objekten und vorherfahrenden Fahrzeugen reflektierte Teilstrahlung empfängt. Erkennt dieser Geschwindigkeitsregler ein vorherfahrendes Fahrzeug, so wird eine Geschwindigkeitsregelung im Sinne einer Konstantabstandsregelung in Bezug auf das vorherfahrende Fahrzeug durchgeführt. Erkennt die Radareinrichtung, dass kein Fahrzeug vorherfährt, so findet eine Geschwindigkeitsregelung im Sinne einer Konstantgeschwindigkeitsregelung auf eine vom Fahrer vorgegebene Setzgeschwindigkeit statt. Die vom adaptiven Geschwindigkeitsregler durchführbaren Beschleunigungen sowie Beschleunigungsänderungen über der Zeit sind hierbei mittels fester Maximalwerte begrenzt, da der adaptive Geschwindigkeitsregler als Komfortsystem zur Fahrerunterstützung gedacht ist und dementsprechend eine komfortable Fahrcharakteristik anstrebt. Nachteilig bei derartigen Systemen, bei denen die Beschleunigungsgradienten unabhängig von den dynamischen Daten vorausfahrender Fahrzeuge bestimmt werden, ist, dass diese Beschleunigungsrucke unkomfortabel wirken. In unkritischen Situationen, beispielsweise bei Annäherung an ein vorausfahrendes Fahrzeug mit geringer Relativgeschwindigkeit, wird der fest vorgegebene Beschleunigungsruck als zu hoch und damit als unkomfortabel empfunden und bei Situationen, in denen eine Kollision verhindert werden soll, beispielsweise bei Annäherung an ein vorausfahrendes Fahrzeug mit hoher Relativgeschwindigkeit, ist der Verzögerungsgradient zu klein, sodass ein Fahrereingriff grundsätzlich notwendig wird. Im Zusammenhang mit dieser Erfindung wird der Begriff "Beschleunigung" sowohl für positive Beschleunigungen als auch für negative Beschleunigungen, also Verzögerungen, benutzt.

Die DE 100 15 300 zeigt ausserdem den nächstliegenden Stand der Technik mit den Merkmalen der Präambel des Anspruch 1 (Vorrichtung) und Anspruch 6 (Verfahren).

### Kern und Vorteile der Erfindung

Der Kern der vorliegenden Erfindung ist es, ein Verfahren und eine Vorrichtung anzugeben, mittels derer die Beschleunigungsrucke, also die Beschleunigungsgradienten, in Abhängigkeit der jeweiligen Situationen so bestimmt werden, dass sie der Beschleunigungs- oder Verzögerungsnotwendigkeit entsprechen. Erfindungsgemäß wird dieses durch die Merkmale der unabhängigen Ansprüche gelöst. Vorteilhafte Weiterbildungen und Ausgestaltungen ergeben sich aus den Unteransprüchen.

Vorteilhafterweise wird als Eingangsgröße mindestens einer der Messwerte Abstand des Objektes vom eigenen Fahrzeug, Relativgeschwindigkeit des Objekts in Bezug auf das eigene Fahrzeug, Längsbeschleunigung des Objekts, Querversatz des Objekts, Quergeschwindigkeit des Objekts oder Querbeschleunigung des Objekts oder eine beliebige Kombination aus diesen Messwerten der Eingangsschaltung zugeführt. Der Querversatz ist hierbei als der Abstand des vorausfahrenden Fahrzeugs in Querrichtung zur vorausberechneten Fahrspurtrajektorie des eigenen Fahrzeugs zu verstehen. Die Fahrspurtrajektorie des eigenen Fahrzeugs ist bei Geradeausfahrt die verlängerte Fahrzeuglängsachse und bei Kurvenfahrten eine dem Kurvenradius angenäherte, interpolierte Bewegungstrajektorie, die das eigene Fahrzeug höchstwahrscheinlich einschlägt.

Weiterhin ist es vorteilhaft, dass der Beschleunigungsgradient für jeden Messwert eines jeden Objekts mittels einer Berechnungseinrichtung oder mittels einer Tabellennachschlageeinrichtung bestimmt wird. Je nach Komplexität der Berechnung kann es einfacher und schneller vonstatten gehen, dass der jeweilige Beschleunigungsgradient mittels einer mathematischen Vorschrift berechnet wird oder aber in einer vorab berechneten und abgelegten Wertetabelle nachgeschlagen wird.

Vorteilhafterweise ist die Summe der Beschleunigungsgradienten für jedes Objekt nicht größer als ein vorgebbarer, maximal vom Geschwindigkeitsregler ausgebbarer Grenzwert. Dieser vom Geschwindigkeitsregler maximal ausgebbare Grenzwert kann wahlweise variabel gestaltet sein, um auf unterschiedliche Situationen unterschiedlich reagieren zu können. Das Vorsehen eines derartigen Grenzwertes sorgt für eine Vermeidung allzu großer Beschleunigungsrucke, was starke Komforteinbußen zur Folge hätte.

Weiterhin ist es vorteilhaft, dass als Zielobjekt das Fahrzeug ausgewählt wird, das unmittelbar vor dem eigenen Fahrzeug vorherfährt. Das Zielobjekt ist dabei das vorausfahrende Fahrzeug, dessen Fahrdynamik Einfluss auf den adaptiven Geschwindigkeitsregler des eigenen Fahrzeugs hat. Ein Beschleunigen oder Verzögern des Zielobjektes resultiert in einer gleichartigen Bewegungsdynamik des eigenen Fahrzeugs, da das Zielobjekt das Fahrzeug ist, dem gefolgt werden soll.

Von besonderer Bedeutung ist die Realisierung des erfindungsgemäßen Verfahrens in der Form eines Steuerelements, das für ein Steuergerät einer adaptiven Abstands- bzw. Geschwindigkeitsregelung eines Kraftfahrzeugs vorgesehen ist. Dabei ist auf dem Steuerelement ein Programm gespeichert, das auf einem Rechengerät, insbesondere auf einem Mikroprozessor oder Signalprozessor, ablauffähig und zur Ausführung des erfindungsgemäßen Verfahrens geeignet ist. In diesem Fall wird also die Erfindung durch ein auf dem Steuerelement abgespeichertes Programm realisiert, sodass dieses mit dem Programm versehene Steuerelement in gleicher Weise die Erfindung darstellt wie das Verfahren, zu dessen Ausführung das Programm geeignet ist. Als Steuerelement kann insbesondere ein elektrisches Speichermedium zur Anwendung kommen, beispielsweise ein Read-Only-Memory.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in den Zeichnungen.

### Zeichnungen

Nachfolgend werden Ausführungsbeispiele der Erfindung anhand von Zeichnungen erläutert. Es zeigt
- Figur 1: ein Ausführungsbeispiel der erfindungsgemäßen Vorrichtung und
- Figur 2: ein Ausführungsbeispiel des erfindungsgemäßen Verfahrens.

### Beschreibung von Ausführungsbeispielen

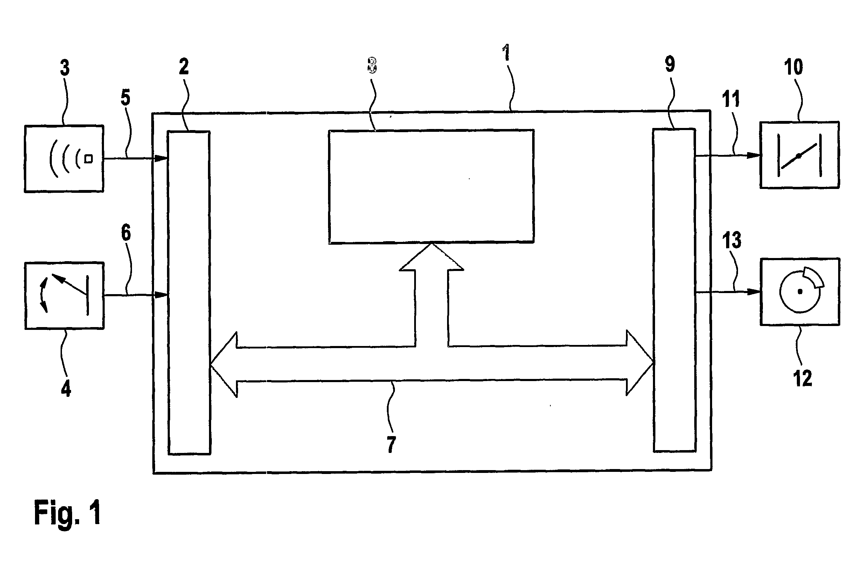

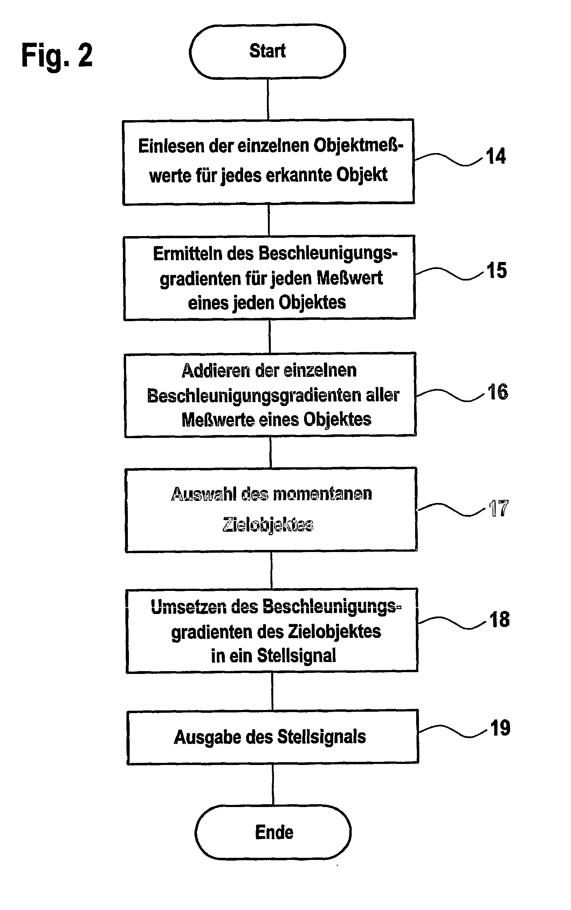

In Figur 1 ist ein adaptiver Abstands- und Geschwindigkeitsregler 1 vorgesehen, der unter anderem über eine Eingangsschaltung 2 verfügt. Mittels der Eingangsschaltung 2 werden dem adaptiven Abstands- und Geschwindigkeitsregler 1 Eingangssignale zugeführt. Unter anderem werden der Eingangsschaltung 2 Signale zugeführt, die Objektdaten 5 enthalten. Diese Objektdaten 5 oder Objektsignale 5 werden von einer Sende- und Empfangseinrichtung für Radarstrahlung 3 erzeugt. Die Sende- und Empfangseinrichtung für Radarstrahlung 3 sendet Mikrowellenstrahlung aus, die an Fahrzeugen und Objekten im Erfassungsbereich reflektiert werden und vom Radarsensor 3 empfangen werden. Aus diesen Messwerten wird für jedes erkannte Objekt der Abstand des Objekts zum eigenen Fahrzeug, die Relativgeschwindigkeit des Objekts in Bezug auf das eigene Fahrzeug, die Längsbeschleunigung des Objekts, der Querversatz des Objektes, also die laterale Ablage des Objektes in Bezug auf die vorausberechnete Bewegungstrajektorie des eigenen Fahrzeugs, die Quergeschwindigkeit des Objekts sowie die Querbeschleunigung des Objekts bestimmt. Wahlweise werden alle oder eine beliebige Kombination aus den aufgezählten Größen an die Eingangsschaltung 2 in Form von Objektdaten 5 ausgegeben. Weiterhin werden der Eingangsschaltung 2 weitere Eingangssignale 6 zugeführt, beispielsweise Steuersignale 6, die von einer Bedien- und Steuereinrichtung 4 stammen. Die Steuer- und Bedieneinrichtung 4 weist fahrerbetätigbare Bedienelemente auf, mittels derer der Fahrer den adaptiven Abstands- und Geschwindigkeitsregler 1 in Betrieb nehmen kann und die Betriebseinstellungen verändern kann. Weiterhin ist es möglich, dass der Eingangsschaltung 2 weitere Größen zugeführt werden, beispielsweise die eigene Fahrzeuggeschwindigkeit oder Zusatzinformationen zur Durchführung weiterer Geschwindigkeitsregelfunktionen. Die mittels der Eingangsschaltung 2 zugeführten Eingangsdaten werden über eine Datenaustauscheinrichtung 7 einer Recheneinrichtung 8 zugeführt, in der aus den Eingangsgrößen Stellsignale zur Ausgabe an nachgeordnete Einrichtungen bestimmt werden. Die durch die Recheneinrichtung 8 bestimmten Stellsignale werden wiederum der Datenaustauscheinrichtung 7 zugeführt, die diese Stellsignale an eine Ausgangsschaltung 9 leitet, die ein Beschleunigungsanforderungssignal 11 oder ein Momentenanforderungssignal 11 an ein leistungsbestimmendes Stellelement 10 einer Brennkraftmaschine ausgibt. Das leistungsbestimmende Stellelement 10 ist dabei vorteilhafterweise als elektrisch betätigbare Drosselklappe oder als Kraftstoffmengenzumesseinrichtung, beispielsweise in Form eines Kraftstoffinjektors, ausgeführt. Ermittelt die Recheneinrichtung 8, dass das eigene Fahrzeug beschleunigt werden soll oder eine positive Ausgangsleistung der Brennkraftmaschine notwendig ist, so wird dieses Beschleunigungs- oder Momentenanforderungssignal an die Brennkraftmaschine ausgegeben. Ebenso wird für den Fall, dass die Recheneinrichtung 8 eine Verzögerungsanforderung bestimmt hat, ein Verzögerungssignal 13 an die Verzögerungseinrichtung 12 des Kraftfahrzeugs ausgegeben. Die Verzögerungseinrichtung 12 ist hierbei vorteilhafterweise ein elektrisch ansteuerbares Bremssystem, dies kann jedoch auch ein weiteres Verzögerungsmittel wie beispielsweise ein Retarder oder eine Motorbremse sein. Da in vielen Fahrsituationen fest vorgegebene Beschleunigungsrucke oder Verzögerungsrucke je nach Situation entweder als zu heftig oder zu schwach empfunden werden, ist in der Recheneinrichtung 8 das erfindungsgemäße Verfahren in Form eines Steuerprogramms vorgesehen, das diese Nachteile verhindern soll. Dieses Verfahren, das in der Recheneinrichtung 8 zur Anwendung kommt, ist in dem Ablaufschema laut Figur 2 aufgezeigt.

In Figur 2 ist ein Ablaufschema zur Durchführung eines Regelverfahrens für den oben beschriebenen Geschwindigkeitsregler abgebildet. Zu Beginn des Verfahrens werden mittels der Eingangsschaltung 2 die einzelnen Objektmesswerte für jedes erkannte Objekt gemäß Schritt 14 eingelesen. Hierbei wird für jedes erkannte Objekt und für jedes erkannte vorherfahrende Fahrzeug mindestens einer der Messwerte Objektabstand, Relativgeschwindigkeit des Objekts, Längsbeschleunigung des Objekts, Querversatz des Objekts, Quergeschwindigkeit des Objektes oder Querbeschleunigung des Objekts oder eine beliebige Kombination hieraus bestimmt und in die Recheneinrichtung 8 übertragen. Gemäß dem Verfahrensschritt 15 wird für jeden Messwert eines jeden erkannten Objekts ein Beschleunigungsgradient bestimmt. Hierbei wird für jede Art Messwert (also Objektabstand für alle Objekte; Relativgeschwindigkeit aller Objekte, etc.) nach einer vorgegebenen Berechnungsvorschrift oder einer vorgegebenen Nachschlagetabelle für jedes Objekt separat ein Beschleunigungsgradient gebildet. Auf diese Weise erhält man für n Objekte mittels m Berechnungsvorschriften insgesamt n * m Beschleunigungsgradienten. Die einzelnen Beschleunigungsgradienten eines einzigen Objektes werden im nächsten Verfahrensschritt 16 miteinander addiert, sodass für n Objekte insgesamt n Beschleunigungsgradienten übrigbleiben, da die m * n Einzelbeschleunigungsgradienten bezüglich ihres zugehörigen Objektes aufaddiert wurden. Auf diese Weise erhält man einen einzigen Beschleunigungsgradienten für jedes erkannte Objekt, die sich dahingehend unterscheiden, ob eine starke Verzögerung, eine leichte Verzögerung oder sogar eine Beschleunigung notwendig wird, falls dieses Objekt als Zielobjekt ausgewählt werden soll. Im Verfahrensschritt 17 wird aus allen erkannten Objekten das momentane Zielobjekt ausgewählt. Das Zielobjekt ist in den meisten Fällen das unmittelbar vorausfahrende Fahrzeug, das die Regelreaktion des eigenen Fahrzeugs bestimmt. Beispielsweise bei Überhoivorgängen, Einschervorgängen anderer Fahrzeuge oder Ausschervorgängen anderer Fahrzeuge findet ein Zielobjektwechsel statt, sodass ein anderes Fahrzeug als primäres Regelobjekt herangezogen wird. Wurde das momentane Zielobjekt gemäß Schritt 17 ausgewählt, so wird der nach Schritt 16 berechnete Beschleunigungsgradient für dieses Zielobjekt gemäß Schritt 18 in ein Stellsignal 11, 13 umgesetzt, das entweder ein leistungsbestimmendes Stelleelement 10 oder die Verzögerungseinrichtungen 12 des Fahrzeugs beeinflusst. Gemäß dem nächsten Verfahrensschritt 19 wird dieses Stellsignal an die Ausgangsschaltung 9 ausgegeben und an die betreffenden Stellglieder weitergeleitet. Das Verfahren wird nach Schritt 19 entweder beendet oder in einer Endlosschleife wieder zum Start zurückgesetzt und beginnt bei Schritt 14 von neuem.

Durch Verwendung der beschriebenen Vorrichtung und des beschriebenen Verfahrens zur Regelung der Geschwindigkeit eines Kraftfahrzeugs ist es möglich, einen Beschleunigungsgradienten oder einen Verzögerungsgradienten zur Geschwindigkeitsregelung eines Kraftfahrzeugs zu ermitteln, die je nach Fahrsituation größer oder kleiner sind, dabei jedoch immer dem Dynamikwunsch, den der Fahrer aus eigener Fahrerfahrung wünscht, entsprechen.

## Patentansprüche

1. Vorrichtung zur Geschwindigkeitsregelung eines Kraftfahrzeugs (1) im Sinne einer Konstantabstandsregelung falls mittels eines Radarsensors (3) mindestens ein vorherfahrendes Fahrzeug detektiert wurde oder im Sinne einer Konstantgeschwindigkeitsregelung falls mittels eines Radarsensors (3) kein vorherfahrendes Fahrzeug detektiert wurde, wobei dem Geschwindigkeitsregler (1) Objektmesswerte (5) für erkannte Objekte zuführbar sind, **dadurch gekennzeichnet, dass** ein Rechenmittel (8) vorgesehen ist, das für jeden Messwert (5) eines jeden Objektes ein Beschleunigungsgradient bestimmt, dass für jedes Objekt die Beschleunigungsgradienten der Messwerte addierbar sind und der addierte Beschleunigungsgradient für das als Zielobjekt ausgewählte Objekt ausgebbar (11,13) ist.

2. Vorrichtung nach Anspruch 1, **dadurch gekennzeichnet, dass** als Eingangsgrößen (5) mindestens einer der Messwerte
- Objektabstand,
- Relativgeschwindigkeit des Objekts,
- Längsbeschleunigung des Objekts,
- Querversatz des Objekts,
- Quergeschwindigkeit des Objekts oder
- Querbeschleunigung des Objekts
oder eine beliebige Kombination hieraus der Eingangsschaltung (2) zuführbar sind.

3. Vorrichtung nach Anspruch 1 oder 2, **dadurch gekennzeichnet, dass** der Beschleunigungsgradient für jeden Messwert eines jeden Objekts mittels einer Berechnungseinrichtung (8) oder mittels einer Tabellennachschlageinrichtung bestimmbar ist.

4. Vorrichtung nach einem der Ansprüche 1 bis 3, **dadurch gekennzeichnet, dass** die Summe der Beschleunigungsgradienten für jedes Objekt einen vorgebbaren, maximal vom Geschwindigkeitsregler (1) ausgebbaren Grenzwert nicht überschreitet.

5. Vorrichtung nach einem der Ansprüche 1 bis 5, **dadurch gekennzeichnet, dass** als Zielobjekt das Fahrzeug ausgewählt wird, das unmittelbar vor dem eigenen Fahrzeug vorherfährt.

6. Verfahren zur Geschwindigkeitsregelung eines Kraftfahrzeugs im Sinne einer Konstantabstandsregelung falls mittels eines Radarsensors (3) mindestens ein vorherfahrendes Fahrzeug detektiert wurde oder im Sinne einer Konstantgeschwindigkeitsregelung falls mittels eines Radarsensors (3) kein vorherfahrendes Fahrzeug detektiert wurde, wobei dem Geschwindigkeitsregler (1) Objektmesswerte für erkannte Objekte zugeführt werden, **dadurch gekennzeichnet dass** für jeden Messwert eines jeden Objekts ein Beschleunigungsgradient mittels eines Rechenmittels (8) bestimmt wird, dass für jedes Objekt die Beschleunigungsgradienten der Messwerte addiert werden und der addierte Beschleunigungsgradient für das als Zielobjekt ausgewählte Objekt ausgegeben (11,13) wird.

7. Verfahren nach Anspruch 6, **dadurch gekennzeichnet, dass** als Eingangsgrößen (5) mindestens einer der Messwerte
- Objektabstand,
- Relativgeschwindigkeit des Objekts,
- Längsbeschleunigung des Objekts,
- Querversatz des Objekts,
- Quergeschwindigkeit des Objekts oder
- Querbeschleunigung des Objekts
oder eine beliebige Kombination hieraus zugeführt werden.

8. Verfahren nach Anspruch 6 oder 7, **dadurch gekennzeichnet, dass** der Beschleunigungsgradient für jeden Messwert eines jeden Objekts mittels einer Berechnungseinrichtung (8) oder mittels einer Tabellennachschlageinrichtung bestimmt wird.

9. Verfahren nach einem der Ansprüche 6 bis 8, **dadurch gekennzeichnet, dass** die Summe der Beschleunigungsgradienten für jedes Objekt einen vorgebbaren, maximal vom Geschwindigkeitsregler (1) ausgebbaren Grenzwert nicht überschreitet.

10. Verfahren nach einem der Ansprüche 6 bis 9, **dadurch gekennzeichnet, dass** als Zielobjekt das Fahrzeug ausgewählt wird, das unmittelbar vor dem eigenen Fahrzeug vorherfährt.

## Claims

1. Device for controlling the speed of a motor vehicle (1) in the sense of inter-vehicle distance control if at least one vehicle travelling ahead has been detected by means of a radar sensor (3), or in the sense of constant inter-vehicle distance control if no vehicle travelling ahead has been detected by means of a radar sensor (3), wherein object measured values (5) for detected objects can be fed to the speed controller (1), **characterized in that** a computing means (8) is provided which determines an acceleration gradient for each measured value (5) of each object, **in that** the acceleration gradients of the measured values can be added for each object and the added acceleration gradient for the object which has been selected as a target object can be output (11, 13).

2. Device according to Claim 1, **characterized in that** at least one of the measured values of
- distance from the object,
- relative speed of the object,
- longitudinal acceleration of the object,
- lateral offset of the object,
- lateral speed of the object or
- lateral acceleration of the object
or any desired combination of these can be fed as input variables (5) to the input circuit (2).

3. Device according to Claim 1 or 2, **characterized in that** the acceleration gradient for each measured value of each object can be determined by means of a calculation device (8) or by means of a table look-up device.

4. Device according to one of Claims 1 to 3, **characterized in that** the sum of the acceleration gradients for each object does not exceed a predefinable limiting value which is the maximum one which can be output by the speed controller (1).

5. Device according to one of Claims 1 to 5, **characterized in that** the vehicle which is travelling immediately in front of the driver's own vehicle is selected as the target object.

6. Method for controlling the speed of a motor vehicle in the sense of inter-vehicle distance control if at least one vehicle travelling ahead has been detected by means of a radar sensor (3), or in the sense of constant inter-vehicle distance control if no vehicle travelling ahead has been detected by means of a radar sensor (3), wherein object measured values for detected objects are fed to the speed controller (1), **characterized in that** an acceleration gradient for each measured value of each object is determined by means of a computing means (8), **in that** the acceleration gradients of the measured values are added for each object and the added acceleration gradient for the object which has been selected as a target object is output (11, 13).

7. Method according to Claim 6, **characterized in that** at least one of the measured values of
- distance from the object,
- relative speed of the object,
- longitudinal acceleration of the object,
- lateral offset of the object,
- lateral speed of the object or
- lateral acceleration of the object
or any desired combination of these are fed as input variables (5).

8. Method according to Claim 6 or 7, **characterized in that** the acceleration gradient for each measured value of each object is determined by means of a calculation device (8) or by means of a table look-up device.

9. Method according to one of Claims 6 to 8, **characterized in that** the sum of the acceleration gradients for each object does not exceed a predefinable limiting value which is the maximum one which can be output by the speed controller (1).

10. Method according to one of Claims 6 to 9, **characterized in that** the vehicle which is travelling immediately in front of the driver's own vehicle is selected as the target object.

## Revendications

1. Dispositif de régulation de vitesse d'un véhicule automobile dans le cas d'une régulation de distance constante si un capteur radar (3) détecte au moins un véhicule en amont ou dans le cas d'une régulation de vitesse constante si le capteur radar (3) ne détecte pas de véhicule en amont, le régulateur de vitesse (1) recevant des valeurs de mesure d'objets (5) pour des objets reconnus,
**caractérisé par**
un moyen de calcul (8) qui détermine un gradient d'accélération pour chaque valeur de mesure (5) de chaque objet,
pour chaque objet, on additionne les gradients d'accélération des valeurs de mesure et
on extrait le gradient d'accélération additionné pour l'objet sélectionné comme objet cible (11, 13).

2. Dispositif selon la revendication 1,
**caractérisé en ce que**
comme grandeur d'entrée (5) on utilise au moins l'une des valeurs de mesure suivantes :
- distance de l'objet,
- vitesse relative de l'objet,
- accélération longitudinale de l'objet,
- décalage transversal de l'objet,
- vitesse transversale de l'objet ou
- accélération transversale de l'objet
ou une combinaison quelconque de ces valeurs fournies au circuit d'entrée (2).

3. Dispositif selon la revendication 1 ou 2,
**caractérisé en ce qu'**
on détermine le gradient d'accélération de chaque valeur de mesure de chaque objet avec une installation de calcul (8) ou à l'aide d'une installation de contrôle par des tableaux.

4. Dispositif selon l'une des revendications 1 à 3,
**caractérisé en ce que**
la somme des gradients d'accélération pour chaque objet ne dépasse pas une valeur limite prédéfinie, maximale, émise par le régulateur de vitesse (1).

5. Dispositif selon l'une des revendications 1 à 4,
**caractérisé en ce que**
comme objet cible on sélectionne le véhicule qui précède directement le propre véhicule.

6. Procédé de régulation de la vitesse d'un véhicule dans le sens d'une régulation de distance constante si un capteur radar (3) détecte un véhicule qui précède ou dans le sens d'une régulation de vitesse constante si le capteur radar (3) ne détecte pas de véhicule qui précède, le régulateur de vitesse (1) recevant des valeurs de mesures d'objets pour un objet reconnu,
**caractérisé en ce que**
pour chaque valeur de mesure de chaque objet on calcule un gradient d'accélération à l'aide d'un moyen de calcul (8),
pour chaque objet on additionne les gradients d'accélération des valeurs de mesures et
on émet le gradient additionné des accélérations pour l'objet sélectionné comme objet cible (11, 13).

7. Procédé selon la revendication 6,
**caractérisé en ce que**
comme grandeur d'entrée (5) on applique au moins l'une des valeurs de mesures suivantes :
- distance de l'objet,
- vitesse relative de l'objet,
- accélération longitudinale de l'objet,
- décalage transversal de l'objet
- vitesse transversale de l'objet ou
- accélération transversale de l'objet
ou une combinaison quelconque de ces valeurs.

8. Procédé selon les revendications 6 ou 7,
**caractérisé en ce que**
pour chaque valeur de mesure de chaque objet, à l'aide de l'installation de calcul (8) ou d'une installation de contrôle par tableaux, on détermine le gradient d'accélération.

9. Procédé selon l'une des revendications 6 à 8,
**caractérisé en ce que**
la somme des gradients d'accélération pour chaque objet ne dépasse pas une valeur limite maximale prédéfinie, fournie par le régulateur de vitesse (1).

10. Dispositif selon l'une des revendications 6 à 9,
**caractérisé en ce que**
on choisit comme objet cible, le véhicule qui précède directement le propre véhicule.
